# EUROPÄISCHE PATENTSCHRIFT

(11) **EP 2 986 493 B1**
(45) Veröffentlichungstag und Bekanntmachung des Hinweises auf die Patenterteilung: **06.05.2020**
(21) Anmeldenummer: 14709586.3
(22) Anmeldetag: 03.03.2014
(51) Int. Cl.: B62M 6/55

(54) **MOTORISCH UND MIT MUSKELKRAFT BETREIBBARES FAHRZEUG**
VEHICLE OPERABLE BY MEANS OF A MOTOR AND USING MUSCLE POWER
VÉHICULE ENTRAÎNABLE PAR UN MOTEUR ET PAR LA FORCE MUSCULAIRE

(30) Priorität: 15.04.2013 DE 102013206713
(43) Veröffentlichungstag der Anmeldung: 24.02.2016
(73) Patentinhaber: Robert Bosch GmbH, 70442 Stuttgart (DE)
(72) Erfinder: DOMMSCH, Hans-Peter, 77839 Lichtenau (DE)
(86) Internationale Anmeldenummer: PCT/EP2014/054027
(87) Internationale Veröffentlichungsnummer: WO 2014/170061

(56) Entgegenhaltungen:
- WO-A1-2011/124415
- DE-A1- 2 218 730
- FR-A1- 2 926 530
- JP-A- H10 194 186
- JP-A- H11 240 481
- US-A- 5 121 936
- US-A1- 2007 155 567
- US-A1- 2012 312 618

## Beschreibung

### Stand der Technik

Die vorliegende Erfindung betrifft ein motorisch und/oder mit Muskelkraft betreibbares Fahrzeug, insbesondere ein Elektrofahrrad, mit einem Reibgetriebe.

Beispielsweise sind Elektrofahrräder aus dem Stand der Technik mit unterschiedlichen Ausgestaltungen bekannt. Hierbei gibt es Elektrofahrräder, bei denen der elektrische Antrieb im Bereich des Tretlagers (Mittelmotorkonzept) angeordnet ist. Über eine Kette wird dann ein Hinterrad angetrieben. Hierbei kann am Hinterrad eine Schalteinrichtung, z.B. eine Kettenschaltung oder Nabenschaltung oder dergleichen, angeordnet sein. Es wäre hier wünschenswert, weitere alternative Anordnungen, insbesondere von Schalteinrichtungen, zu haben. Dokument FR 2 926 530 A1 offenbart den Oberbegriff des Anspruchs 1.

### Offenbarung der Erfindung

Das erfindungsgemäße motorisch und/oder mit Muskelkraft betreibbare Fahrzeug, insbesondere Elektrofahrrad, mit den Merkmalen des Anspruchs 1 weist den Vorteil auf, dass ein besonders kompakter Aufbau eines elektrischen Antriebs und einer Schalteinrichtung möglich ist. Dabei ist ein besonderer Vorteil, dass die Schalteinrichtung eine stufenlose Änderung einer Übersetzung ermöglicht. Hierbei kann erfindungsgemäß eine besonders kompakte Bauweise ermöglicht werden. Weiterhin kann durch eine stufenlose Änderung einer Übersetzung ein besonders gutes Zusammenspiel zwischen einem Pedalantrieb und einem elektrischen Antrieb ermöglicht werden, so dass die vorliegende Erfindung besonders für ein Elektrofahrrad geeignet ist. Hierbei kann eine Änderung der Übersetzung auch unter Last problemlos ermöglicht werden und insbesondere kann auch ein Geräusch bei einer Änderung des Übersetzungsverhältnisses vermieden werden, so dass eine erfindungsgemäße Änderung des Übersetzungsverhältnisses sehr leise ist. Dies wird erfindungsgemäß dadurch erreicht, dass das Fahrzeug einen Kurbeltrieb mit einer Tretlagerwelle, ein Kettenblatt und einen elektrischen Antrieb aufweist. Ferner umfasst das Fahrzeug ein stufenloses Reibgetriebe für eine stufenlose Änderung des Übersetzungsverhältnisses. Das Reibgetriebe ist dabei am Kurbeltrieb angeordnet und ist derart mit dem Kurbeltrieb verbunden und eingerichtet, ein durch einen Fahrer erzeugtes Drehmoment auf das Kettenblatt zu übertragen. Das stufenlose Reibgetriebe hat weiterhin den Vorteil, dass ein Schalten unter Last möglich ist und ein Fahrer keine Übersetzungssprünge bemerkt. Hieraus resultiert ein besonders vorteilhaftes Fahrgefühl, insbesondere in Kombination mit dem elektrischen Antrieb, da dessen Drehmoment und Drehzahl ebenfalls stufenlos steuerbar ist.

Die Unteransprüche zeigen bevorzugte Weiterbildungen der Erfindung.

Für einen besonders kompakten Aufbau ist vorzugsweise das Reibgetriebe innerhalb eines Gehäuses des Kurbeltriebs angeordnet.

Vorzugsweise ist das Reibgetriebe ein Zugmittelgetriebe, insbesondere ein CVT-Getriebe mit einem Zugmittel und zwei Kegelscheibenpaaren.

Weiter bevorzugt weist das Fahrzeug ein erstes Planetengetriebe auf, über welches der elektrische Antrieb mit dem Kettenblatt verbunden ist und das Kettenblatt antreibt. Eine Verbindung zwischen dem Planetengetriebe und dem Kettenblatt kann beispielsweise über eine Hülse oder dergleichen erfolgen. Die Hülse ist vorzugsweise über einen Freilauf an der Tretlagerwelle gelagert.

Vorzugsweise treibt der elektrische Antrieb das Kettenblatt über das Reibgetriebe an. Hierdurch ergibt sich der Vorteil, dass eine stufenlos einstellbare Übersetzung mittels des Reibgetriebes möglich ist, so dass je nach Ansteuerung des elektrischen Antriebs ein optimales Übersetzungsverhältnis durch das Reibgetriebe ermöglicht werden kann.

Weiter bevorzugt ist das Reibgetriebe über das erste Planetengetriebe mit dem Kettenblatt verbunden. Besonders bevorzugt ist hierbei ein Planetengetriebe zwischen dem elektrischen Antrieb und dem Reibgetriebe angeordnet.

Vorzugsweise weist ein Hohlrad des Planetengetriebes eine Außenverzahnung auf, über welche ein Abtrieb des elektrischen Antriebs in das Planetengetriebe erfolgt.

Gemäß einer weiteren bevorzugten Ausgestaltung der Erfindung ist eine Übersetzung des Reibgetriebes mittels eines durch den Fahrer betätigbaren Aktuators veränderbar. Wenn das Reibgetriebe ein CVT-Getriebe ist, erfolgt eine Verstellung eines der beiden Kegelscheibenpaare vorzugsweise mittels eines Verstellmotors.

Ein besonders kompakter Aufbau ergibt sich, wenn die Tretlagerwelle durch ein Bauteil des Reibgetriebes, insbesondere durch eines der Kegelscheibenpaare des CVT-Getriebes, verläuft.

Weiter bevorzugt umfasst das Fahrzeug ferner ein zweites Planetengetriebe, wobei das zweite Planetengetriebe zwischen der Tretlagerwelle und dem Reibgetriebe angeordnet ist. Dadurch kann eine noch bessere Anpassung und Übersetzung des vom Fahrer aufgebrachten Drehmoments erreicht werden.

Vorzugsweise umfasst das Fahrzeug ferner eine Steuereinheit und einen Kraftsensor zur Erfassung einer Kraft, welche durch den Fahrer aufgebracht wird. Hierdurch kann ein Kraftwert bestimmt werden, wobei die Steuereinheit eingerichtet ist, den elektrischen Antrieb des Fahrzeugs, basierend auf dem erfassten Kraftwert, zu steuern. Zusätzlich oder alternativ kann auch ein vom Fahrer aufgebrachtes Drehmoment zur Steuerung des elektrischen Antriebs verwendet werden. Vorzugsweise ist der Kraftsensor am Hohlrad des zweiten Planetengetriebes angeordnet. Auf diese Weise kann der Kraftsensor einfach in die Motorgetriebeanordnung eingebunden werden.

Gemäß einer weiteren bevorzugten Ausgestaltung der Erfindung ist das Reibgetriebe oberhalb der Tretlagerwelle angeordnet. Weiter bevorzugt ist der elektrische Motor unterhalb der Tretlagerwelle angeordnet.

Das erfindungsgemäße Fahrzeug ist besonders bevorzugt ein Elektrofahrrad, wobei durch die Verwendung des erfindungsgemäßen stufenlosen Reibgetriebes auf eine Schalteinrichtung an einem Hinterrad des Elektrofahrrads verzichtet werden kann. Die Anordnung sowohl des elektrischen Antriebs als auch der Schalteinrichtung in Form des Reibgetriebes am Tretlager ermöglicht dabei ferner einen besonders tiefen Schwerpunkt des Elektrofahrrads, was sich positiv auf die Handling-Eigenschaften des Elektrofahrrads auswirkt.

### Zeichnung

Nachfolgend werden bevorzugte Ausführungsbeispiele der Erfindung unter Bezugnahme auf die begleitende Zeichnung im Detail beschrieben. In den Ausführungsbeispielen sind gleiche bzw. funktional gleiche Teile jeweils mit den gleichen Bezugszeichen bezeichnet. In der Zeichnung ist:
- Figur 1: eine schematische Darstellung eines Elektrofahrrads gemäß einem ersten Ausführungsbeispiel der Erfindung,
- Figur 2: eine schematische Ansicht eines Kurbeltriebs eines Elektrofahrrads gemäß dem ersten Ausführungsbeispiel der Erfindung,
- Figur 3: eine schematische Ansicht eines Kurbeltriebs eines Elektrofahrrads gemäß einem zweiten Ausführungsbeispiel der Erfindung,
- Figur 4: eine schematische Ansicht eines Kurbeltriebs eines Elektrofahrrads gemäß einem dritten Ausführungsbeispiel der Erfindung, und
- Figur 5: eine schematische Teilansicht des Kurbeltriebs von Figur 4.

### Bevorzugte Ausführungsformen der Erfindung

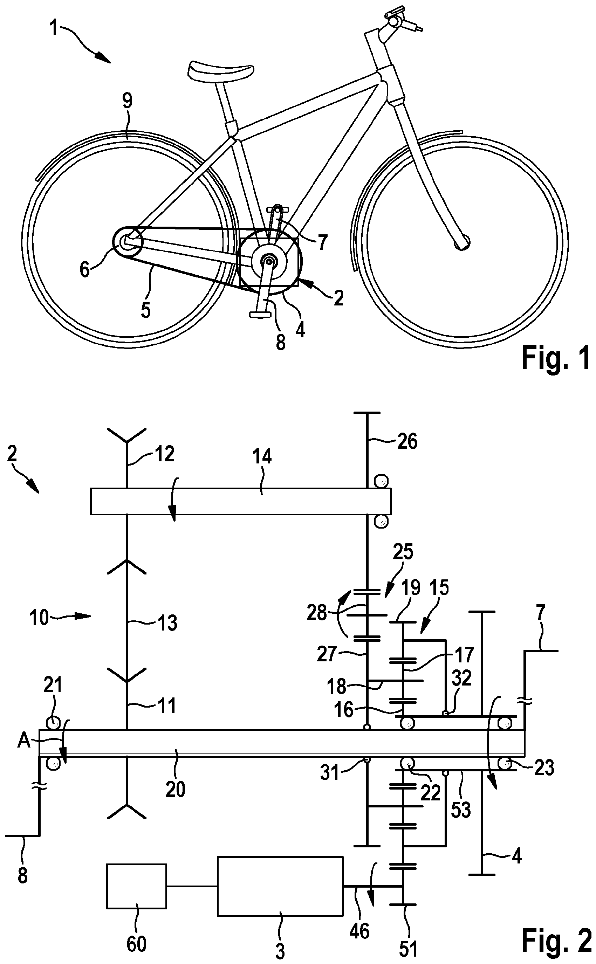

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2, in welchen ein elektrischer Antrieb 3 (siehe Figur 2) integriert ist. Ein Kettenblatt 4 gibt eine Antriebskraft über eine Kette 5 an ein an einem Hinterrad 9 angeordnetes Ritzel 6 ab. Die Bezugszeichen 7 und 8 bezeichnen Kurbeln mit Pedalen des Elektrofahrrads.

In Figur 2 ist im Detail der Kurbeltrieb 2 gezeigt. Der Kurbeltrieb 2 umfasst neben den beiden Kurbeln 7, 8 eine Tretlagerwelle 20, welche an einem ersten Tretlager 21, einem zweiten Tretlager 22 und einem dritten Tretlager 23 gelagert ist. Eine von einem Fahrer aufgebrachte Tretkraft wird dabei über die Pedale auf die Tretlagerwelle 20 übertragen. Eine Drehung der Tretlagerwelle ist durch den Pfeil A angedeutet.

Auf der Tretlagerwelle 20 ist ferner ein Eingangs-Kegelscheibenpaar 11 eines CVT-Getriebes 10 angeordnet. Das CVT-Getriebe 10 umfasst ferner ein Ausgangs-Kegelscheibenpaar 12 sowie ein die beiden Kegelscheibenpaare verbindendendes Zugmittel 13, z.B. einen Riemen. Das Ausgangs-Kegelscheibenpaar 12 ist dabei auf einer Zwischenwelle 14 fixiert, an welcher ferner ein erstes Zahnrad 26 einer ersten Getriebestufe 25 angeordnet ist.

Die erste Getriebestufe 25 umfasst ferner ein zweites Zahnrad 27 sowie ein Zwischenrad 28 für eine Drehrichtungsumkehr innerhalb der ersten Getriebestufe 25.

Wie weiter aus Figur 2 ersichtlich ist, ist das zweite Zahnrad 27 mit einem Planetenradträger 18 eines Planetengetriebes 15 verbunden. Das Planetengetriebe 15 umfasst ferner ein Sonnenrad 16, Planetenräder 17 sowie ein Hohlrad 19.

Das Sonnenrad 16 ist dabei auf einer Hülse 53 angeordnet, auf welcher auch das Kettenblatt 4 angeordnet ist (vgl. Figur 2). Die Hülse 53 ist dabei über das zweite und dritte Tretlager 22, 23 an der Tretlagerwelle 20 gelagert.

Das Hohlrad 19 des Planetengetriebes 15 weist ferner eine Außenverzahnung auf, welche mit einem Motorritzel 51 des elektrischen Antriebs 3 kämmt. Das Motorritzel 51 ist dabei auf einer Motorausgangswelle 46 angeordnet. Eine Steuereinheit 60 steuert den elektrischen Antrieb 3.

Das zweite Zahnrad 27 der ersten Getriebestufe 25 ist mittels eines ersten Lagers 31 auf der Tretlagerwelle 20 gelagert. Ferner ist das Hohlrad 19 des Planetengetriebes 15 mittels eines zweiten Lagers 32 auf der Tretlagerwelle gelagert.

Das CVT-Getriebe 10 kann über einen nicht gezeigten Aktuator durch den Fahrer geschaltet werden. Somit kann das Elektrofahrrad auf eine Gangschaltung an der Nabe des Hinterrads 9 verzichten.

Somit gehen insgesamt eine Pedalkraft eines Fahrers über die Tretlagerwelle 20 und das CVT-Getriebe 10 in das Planetengetriebe 15. Falls zusätzlich oder ausschließlich ein Antreiben mittels des elektrischen Antriebs 3 gewünscht wird, geht dieses Drehmoment des elektrischen Antriebs 3 ebenfalls in das Planetengetriebe 15 und von dort über das Sonnenrad 16 und die Hülse 53 auf das Kettenblatt 4.

Erfindungsgemäß nimmt somit das als CVT-Getriebe 10 ausgebildete Reibgetriebe die Funktion einer Schalteinrichtung des Fahrrads. Hierbei kann eine Änderung einer Übersetzung am CVT-Getriebe 10 stufenlos erfolgen. Die erfindungsgemäße Antriebseinheit mit Getriebe am Kurbeltrieb kann dabei sehr kompakt und kleinbauend sein. Hierbei ist die Motorausgangswelle 46 parallel zur Tretlagerwelle 20 und auch parallel zur Zwischenwelle 14 am Ausgang des CVT-Getriebes 10.

Erfindungsgemäß kann somit sowohl eine Schalteinrichtung als auch ein elektrischer Antrieb 3 am Kurbeltrieb 2 angeordnet werden. Vorzugsweise sind dabei der elektrische Antrieb 3 und die als CVT-Getriebe 10 ausgebildete Schalteinrichtung in einem gemeinsamen Gehäuse des Kurbeltriebs 2 angeordnet. Wie aus Figur 2 ersichtlich ist, ist dabei die Zwischenwelle 14 über der Tretlagerwelle 20 angeordnet und der elektrische Antrieb 3 unterhalb der Tretlagerwelle 20 angeordnet. Das CVT-Getriebe 10 kann dabei eine stufenlose Übersetzung eines von einem Fahrer aufgebrachten Drehmoments ermöglichen. Hierdurch ist ein besonders gutes Zusammenspiel des vom Fahrer aufgebrachten Drehmoments und des vom elektrischen Antrieb 3 bereitgestellten Drehmoments möglich. Insbesondere ermöglicht das CVT-Getriebe 10 auch eine Änderung der Übersetzung unter Last, so dass auch bei einer Änderung einer Übersetzung der elektrische Antrieb 3 bei Bedarf kontinuierlich angetrieben werden kann und zusätzliches Drehmoment für einen Vortrieb bereitstellen kann.

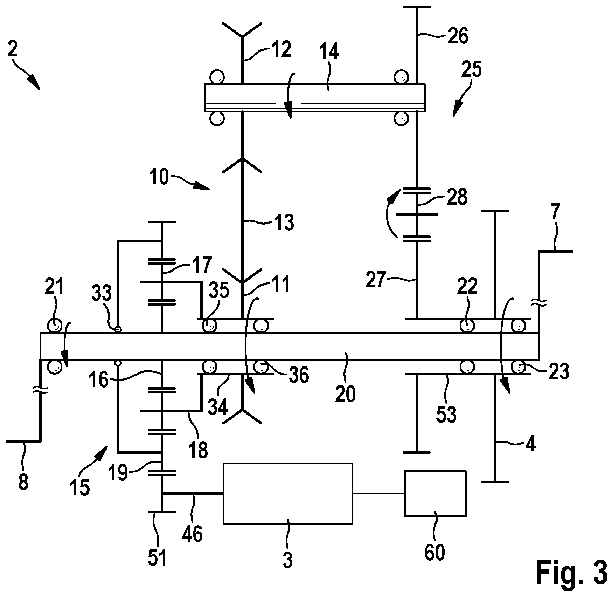

Figur 3 zeigt einen Kurbeltrieb gemäß einem zweiten Ausführungsbeispiel der Erfindung, bei dem im Unterschied zum ersten Ausführungsbeispiel neben dem vom Fahrer durch Pedalieren aufgebrachten Drehmoment auch das abgegebene Drehmoment des elektrischen Antriebs 3 in das CVT-Getriebe 10 eingegeben wird. Hierbei ist zwischen der Tretlagerwelle 20 und dem CVT-Getriebe 10 sowie zwischen dem elektrischen Antrieb 3 und dem CVT-Getriebe 10 ein Planetengetriebe 15 angeordnet. Das Sonnenrad 16 des Planetengetriebes 15 ist dabei fest auf der Tretlagerwelle 20 angeordnet und nimmt somit das durch Pedalieren erzeugte Drehmoment auf. Der elektrische Antrieb 3 gibt ein Drehmoment über eine Motorausgangswelle 46 und ein Motorritzel 51 an ein Hohlrad 19 des Planetengetriebes 15 ab. Das Hohlrad 19 weist hierbei eine Außenverzahnung auf, welche mit dem Motorritzel 51 kämmt. Ein Abtrieb vom Planetengetriebe 15 erfolgt über einen Planetenträger 18, welcher mit einer Hohlwelle 34 verbunden ist. Die Hohlwelle 34 ist über ein viertes und fünftes Tretlager 35, 36 an der Tretlagerwelle 20 gelagert und ist mit dem Eingangs-Kegelscheibenpaar 11 des CVT-Getriebes 10 fest verbunden (vgl. Figur 3).

Dem CVT-Getriebe 10 nachgeschaltet ist wiederum eine erste Getriebestufe 25 mit einem ersten Zahnrad 26, einem zweiten Zahnrad 27 und einem Zwischenzahnrad 28 für eine Drehrichtungsumkehr. Dabei ist das zweite Zahnrad 27 direkt auf der Hülse 53, an welcher das Kettenblatt 4 angeordnet ist, angeordnet.

Das zweite Ausführungsbeispiel hat dabei den Vorteil, dass über das CVT-Getriebe 10 sowohl das vom Fahrer durch Pedalieren aufgebrachte Drehmoment als auch das von elektrischen Antrieb 3 aufgebrachte Drehmoment über das CVT-Getriebe in gewünschter Weise übersetzt werden kann. Hierbei kann eine Steuerung des elektrischen Antriebs 3 derart erfolgen, dass dieser möglichst immer im optimalen Drehzahlbereich betrieben wird und dann über das CVT-Getriebe 10 eine in Abhängigkeit eines durch Fahrer durch Pedalieren aufgebrachten Drehmoments optimale Übersetzung erfolgt.

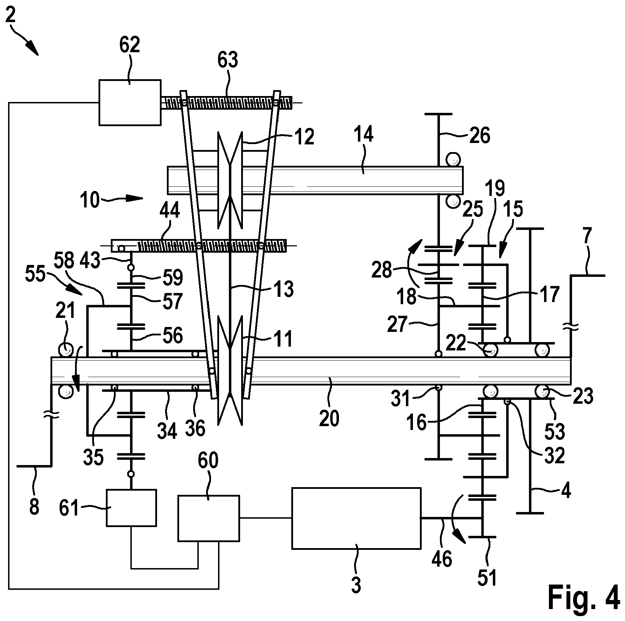

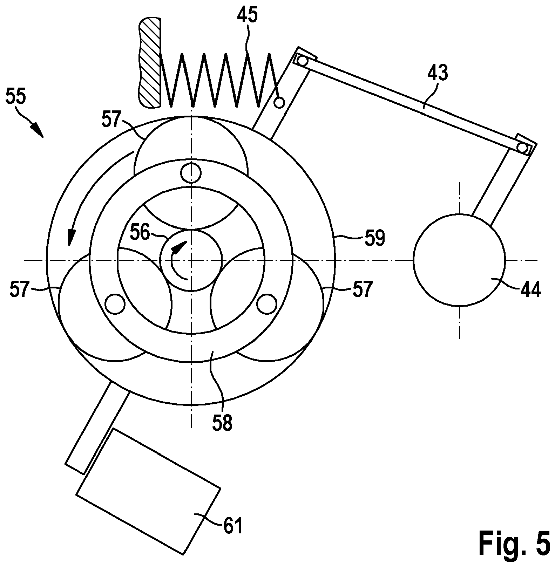

Die Figuren 4 und 5 zeigen einen Kurbeltrieb 2 gemäß einem dritten Ausführungsbeispiel der Erfindung. Wie beim ersten Ausführungsbeispiel ist beim dritten Ausführungsbeispiel nur eine durch einen Fahrer aufgebrachtes Drehmoment über das CVT-Getriebe 10 veränderbar. Der elektrische Antrieb 3 gibt sein Drehmoment in ein erstes Planetengetriebe 15 ab, wie beim ersten Ausführungsbeispiel. Beim dritten Ausführungsbeispiel ist ferner noch ein zweites Planetengetriebe 55 mit einem Sonnenrad 56, Planetenrädern 57, einem Planetenradträger 58 und einem Hohlrad 59 vorgesehen. Das Hohlrad 59 ist feststehend. Ein vom Fahrer durch Pedalieren aufgebrachtes Drehmoment wird über den mit der Tretlagerwelle 20 verbundenen Planetenradträger 58 in das zweite Planetengetriebe 55 eingebracht. Ein Abtrieb aus dem zweiten Planetengetriebe 55 erfolgt über das Sonnenrad 56 auf eine Hohlwelle 34. Die Hohlwelle 34 ist an der Tretlagerwelle 20 mittels eines vierten und fünften Tretlagers 35, 36 gelagert. Die Hohlwelle 34 ist direkt mit dem Eingangs-Kegelscheibenpaar 11 des CVT-Getriebes 10 verbunden.

Am feststehenden Hohlrad 59 des zweiten Planetengetriebes 55 ist ferner noch eine Zugstange 43 angeordnet, welche mit einer Spannspindel 44 zum Vorspannen des CVT-Getriebes 10 verbunden ist. Die Zugstange 43 ist mittels einer Feder 45 vorgespannt (vgl. Figur 5).

Weiterhin ist am feststehenden Hohlrad 59 ein Kraftsensor 61 angeordnet, welcher eingerichtet ist, eine durch den Fahrer aufgebrachte Pedalkraft zu ermitteln. Der Kraftsensor 61 ist mit der Steuereinheit 60 verbunden. Zur Verstellung des Übersetzungsverhältnisses des CVT-Getriebes 10 ist ein Verstellmotor 62 und eine Verstellspindel 63 vorgesehen. Durch die Verstellspindel 63 wird insbesondere ein Abstand des Ausgangs-Kegelscheibenpaars 12 des CVT-Getriebes 10 verändert.

Wenn ein Fahrer über die Kurbeln 7, 8 pedaliert, wird auf das feststehende Hohlrad 59 des zweiten Planetengetriebes 55 ein Drehmoment ausgeübt, welches auf die Zugstange 43 übertragen wird. Wenn der Fahrer im Betrieb stärker pedaliert und sich somit das Drehmoment erhöht, wird die Spannspindel 44 stärker verdreht. Gleichzeitig wird an der gegenüberliegenden Seite der Spannspindel 44 mittels des Kraftsensors 61 am Hohlrad 59 eine Kraft gemessen, welche der durch den Fahrer aufgebrachten Kraft entspricht. Basierend auf dieser Kraft bestimmt die Steuereinheit 60 ein optimales Übersetzungsverhältnis des CVT-Getriebes 10 und steuert entsprechend den Verstellmotor 62 an. Somit kann beim dritten Ausführungsbeispiel durch eine einfache und kompakte Pedalkraftmessung eine Steuerung des optimalen Übersetzungsverhältnisses am CVT-Getriebe 10 sichergestellt werden.

## Patentansprüche

1. Mit Motorkraft und/oder Pedalkraft betreibbares Fahrzeug, insbesondere Elektrofahrrad, umfassend
- einen Kurbeltrieb (2) mit einer Tretlagerwelle (20),
- ein Kettenblatt (4), welches ein Antriebsmoment für das Fahrzeug an eine Kette (5) abgibt,
- einen elektrischen Antrieb (3) und
- ein Reibgetriebe (10) zur stufenlosen Änderung eines Übersetzungsverhältnisses,
- wobei das Reibgetriebe (10) und der elektrische Antrieb (3) am Kurbeltrieb (2) angeordnet sind und
- wobei das Reibgetriebe (10) mit dem Kurbeltrieb (2) verbunden ist und eingerichtet ist, ein durch einen Fahrer erzeugtes Drehmoment auf das Kettenblatt (4) zu übertragen,
und
- wobei das Reibgetriebe (10) ein CVT-Getriebe mit einem Eingangs- Kegelscheibenpaar (11), einem Ausgangs-Kegelscheibenpaar (12) und einem Zugmittel (13) ist, und
- auf der Tretlagerwelle (20) ist ferner das Eingangs-Kegelscheibenpaar (11) des CVT-Getriebes (10) angeordnet,
**dadurch gekennzeichnet, dass**
- das Ausgangs-Kegelscheibenpaar (12) des Reibgetriebes (10) auf einer Zwischenwelle (14) fixiert ist, an welcher ferner ein erstes Zahnrad (26) einer ersten Getriebestufe (25) angeordnet ist, wobei die erste Getriebestufe (25) ein zweites Zahnrad (27) sowie ein Zwischenrad (28) für eine Drehrichtungsumkehr innerhalb der ersten Getriebestufe (25) umfasst.

2. Fahrzeug nach Anspruch 1, **dadurch gekennzeichnet, dass** das Reibgetriebe (10) innerhalb eines Gehäuses des Kurbeltriebs angeordnet ist.

3. Fahrzeug nach einem der vorhergehenden Ansprüche, **dadurch gekennzeichnet, dass** der elektrische Antrieb (3) das Kettenblatt (4) über ein erstes Planetengetriebe (15) antreibt.

4. Fahrzeug nach Anspruch 1, **dadurch gekennzeichnet, dass** der elektrische Antrieb (3) das Kettenblatt (4) über das Reibgetriebe antreibt.

5. Fahrzeug nach Anspruch 3 oder 4, **dadurch gekennzeichnet, dass** das Reibgetriebe (10) über das erste Planetengetriebe (15) mit dem Kettenblatt (4) verbunden ist.

6. Fahrzeug nach einem der vorhergehenden Ansprüche, **dadurch gekennzeichnet, dass** die Tretlagerwelle (20) durch ein Bauteil des Reibgetriebes (10) hindurch, insbesondere durch das Eingangs-Kegelscheibenpaar (11) hindurch, verläuft.

7. Fahrzeug nach einem der vorhergehenden Ansprüche, ferner umfassend ein zweites Plantengetriebe (55), wobei das zweite Planetengetriebe (55) zwischen der Tretlagerwelle (20) und dem Reibgetriebe (10) angeordnet ist.

8. Fahrzeug nach einem der vorhergehenden Ansprüche, ferner umfassend eine Steuereinheit (60) und einen Kraftsensor (61) zur Erfassung einer Kraft, welche durch einen Fahrer aufgebracht wird, wobei die Steuereinheit (60) eingerichtet ist, den elektrischen Antrieb (3), basierend auf dem erfassten Kraftwert des Kraftsensors (61) zu steuern.

9. Fahrzeug nach Anspruch 8, wobei der Kraftsensor (61) am feststehenden Hohlrad (59) des zweiten Planetengetriebes (55) angeordnet ist.

10. Fahrzeug nach einem der vorhergehenden Ansprüche, **dadurch gekennzeichnet, dass** das Reibgetriebe (10) oberhalb der Tretlagerwelle (20) angeordnet ist und/oder dass der elektrische Antrieb (3) unterhalb der Tretlagerwelle (20) angeordnet ist.

## Claims

1. Vehicle operable by motor power and/or pedal power, in particular electric bicycle, comprising
- a crank drive (2) with a bottom-bracket shaft (20),
- a chain wheel (4) which outputs a drive torque for the vehicle to a chain (5),
- an electric drive (3), and
- a friction-type transmission (10) for continuously variably changing a transmission ratio,
- wherein the friction-type transmission (10) and the electric drive (3) are arranged at the crank drive (2), and
- wherein the friction-type transmission (10) is connected to the crank drive (2) and is configured to transmit a torque generated by a rider to the chain wheel (4),
- wherein the friction-type transmission (10) is a CVT with an input conical pulley pair (11), an output conical pulley pair (12) and a traction mechanism (13), and
- the input conical pulley pair (11) of the CVT (10) is also arranged on the bottom-bracket shaft (20),
**characterized in that**
- the output conical pulley pair (12) of the friction-type transmission (10) is fixed to an intermediate shaft (14) on which a first toothed gear (26) of a first transmission stage (25) is also arranged, wherein the first transmission stage (25) comprises a second toothed gear (27) and an intermediate wheel (28) for a rotational direction reversal within the first transmission stage (25).

2. Vehicle according to Claim 1, **characterized in that** the friction-type transmission (10) is arranged within a housing of the crank drive.

3. Vehicle according to any of the preceding claims, **characterized in that** the electric drive (3) drives the chain wheel (4) via a first planetary transmission (15).

4. Vehicle according to Claim 1, **characterized in that** the electric drive (3) drives the chain wheel (4) via the friction-type transmission.

5. Vehicle according to Claim 3 or 4, **characterized in that** the friction-type transmission (10) is connected via the first planetary transmission (15) to the chain wheel (4).

6. Vehicle according to any of the preceding claims, **characterized in that** the bottom-bracket shaft (20) runs through a component of the friction-type transmission (10), in particular through the input conical pulley pair (11).

7. Vehicle according to any of the preceding claims, furthermore comprising a second planetary transmission (55), wherein the second planetary transmission (55) is arranged between the bottom-bracket shaft (20) and the friction-type transmission (10).

8. Vehicle according to any of the preceding claims, furthermore comprising a control unit (60) and a force sensor (61) for detecting a force imparted by a rider, wherein the control unit (60) is configured to control the electric drive (3) on the basis of the detected force value of the force sensor (61).

9. Vehicle according to Claim 8, wherein the force sensor (61) is arranged on the static internal gear (59) of the second planetary transmission (55).

10. Vehicle according to any of the preceding claims, **characterized in that** the friction-type transmission (10) is arranged above the bottom-bracket shaft (20) and/or **in that** the electric drive (3) is arranged below the bottom-bracket shaft (20).

## Revendications

1. Véhicule pouvant être entraîné par un moteur et/ou par la force appliquée à une pédale, en particulier bicyclette électrique, comprenant
- un mécanisme à manivelle (2) avec un axe de pédalier (20),
- un plateau (4) qui fournit à une chaîne (5) un couple d'entraînement pour le véhicule,
- un entraînement électrique (3) et
- une transmission par friction (10) pour faire varier en continu un rapport de démultiplication,
- la transmission par friction (10) et l'entraînement électrique (3) étant disposés au niveau du mécanisme à manivelle (2) et
- la transmission par friction (10) étant connectée au mécanisme à manivelle (2) et étant prévue pour transférer un couple produit par un conducteur au plateau (4),
- la transmission par friction (10) étant une transmission à CVT avec une paire de disques coniques d'entrée (11), une paire de disques coniques de sortie (12) et un moyen de traction (13) et
- la paire de disques coniques d'entrée (11) de la transmission à CVT (10) étant en outre disposée sur l'axe de pédalier (20),
**caractérisé en ce que**
- la paire de disques coniques de sortie (12) de la transmission par friction (10) est fixée sur un arbre intermédiaire (14) sur lequel est en outre disposée une première roue dentée (26) d'un premier étage de transmission (25), le premier étage de transmission (25) comprenant une deuxième roue dentée (27) ainsi qu'une roue intermédiaire (28) pour une inversion du sens de rotation à l'intérieur du premier étage de transmission (25).

2. Véhicule selon la revendication 1, **caractérisé en ce que** la transmission par friction (10) est disposée à l'intérieur d'un boîtier du mécanisme à manivelle.

3. Véhicule selon l'une quelconque des revendications précédentes, **caractérisé en ce que** l'entraînement électrique (3) entraîne le plateau (4) par le biais d'un premier engrenage planétaire (15).

4. Véhicule selon la revendication 1, **caractérisé en ce que** l'entraînement électrique (3) entraîne le plateau (4) par le biais de la transmission par friction.

5. Véhicule selon la revendication 3 ou 4, **caractérisé en ce que** la transmission par friction (10) est connectée au plateau (4) par le biais du premier engrenage planétaire (15).

6. Véhicule selon l'une quelconque des revendications précédentes, **caractérisé en ce que** l'axe de pédalier (20) s'étend à travers un composant de la transmission par friction (10), en particulier à travers la paire de disques coniques d'entrée (11) .

7. Véhicule selon l'une quelconque des revendications précédentes, comprenant en outre un deuxième engrenage planétaire (55), le deuxième engrenage planétaire (55) étant disposé entre l'axe de pédalier (20) et la transmission par friction (10) .

8. Véhicule selon l'une quelconque des revendications précédentes, comprenant en outre une unité de commande (60) et un capteur de force (61) pour détecter une force qui est appliquée par un conducteur, l'unité de commande (60) étant prévue pour commander l'entraînement électrique (3) sur la base de la valeur de la force détectée par le capteur de force (61).

9. Véhicule selon la revendication 8, dans lequel le capteur de force (61) est disposé au niveau de la couronne dentée fixe (59) du deuxième engrenage planétaire (55).

10. Véhicule selon l'une quelconque des revendications précédentes, **caractérisé en ce que** la transmission par friction (10) est disposée au-dessus de l'axe de pédalier (20) et/ou **en ce que** l'entraînement électrique (3) est disposé en dessous de l'axe de pédalier (20).
